Europäisches Patentamt

European Patent Office

Office européen des brevets

(11) Veröffentlichungsnummer: **0 338 254**
**A2**

## (12) EUROPÄISCHE PATENTANMELDUNG

(21) Anmeldenummer: **89104760.7**

(51) Int. Cl.⁴: **H02M 1/15**

(22) Anmeldetag: **17.03.89**

(30) Priorität: **22.04.88 DE 3813584**

(43) Veröffentlichungstag der Anmeldung:
**25.10.89 Patentblatt 89/43**

(84) Benannte Vertragsstaaten:
**AT CH DE ES FR IT LI**

(71) Anmelder: **Blaupunkt-Werke GmbH**
**Robert-Bosch-Strasse 200**
**D-3200 Hildesheim(DE)**

(72) Erfinder: **Martinetz, Heribert**
**Trockener Kamp 50**
**D-3200 Hildesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) Schaltungsanordnung zur Kompensation von Störungen.

(57) Bei einer Schaltungsanordnung zur Kompensation von durch einen Spannungswandler verursachten Störungen, wobei der Spannungswandler einen Transformator umfaßt und über eine Spannungsschiene mit Betriebsspannung versorgt wird, ist eine Kopplung zwischen einem Anschluß des Transformators und der Spannungsschiene vorgesehen. Die Kopplung erfolgt vorzugsweise mit einem Kondensator, der an eine Sekundärwicklung oder Hilfswicklung über einen abgleichbaren Spannungsteiler angeschlossen ist.

EP 0 338 254 A2

## Schaltungsanordnung zur Kompensation von Störungen

Die Erfindung geht aus von einer Schaltungsanordnung nach der Gattung des Hauptanspruchs.

Zur Erzeugung der Betriebsspannungen für nachrichtentechnische Geräte, insbesondere Fernsehgeräte, aus der Netzspannung sind Spannungswandler bekannt geworden, bei denen die gleichgerichtete Spannung in eine Wechselspannung hoherer Frequenz umgewandelt und anschließend transformiert wird. Je nach Erfordernissen im einzelnen sind mehrere Sekundärwicklungen vorgesehen, deren Spannungen gleichgerichtet werden.

Da mit steigender Frequenz der erzeugten Wechselspannung der Transformator sowie die Siebkondensatoren auf der Sekundärseite kleiner werden können, werden die bekannten Spannungswandler mit relativ hohen Frequenzen betrieben. Da ferner die Verlustleistungen in dem Schalttransistor umso kleiner sind, je kürzer die Schaltzeiten sind, entstehen Störspannungen in einem großen Frequenzbereich.

Die Aufgabe der vorliegenden Erfindung ist es, die Weiterleitung derartiger Störspannungen weitgehend zu verhindern.

Die erfindungsgemäße Schaltungsanordnung mit den kennzeichnenden Merkmalen des Hauptanspruchs hat den Vorteil, daß eine Kompensation der Störspannungen mit äußerst einfachen Mitteln möglich ist.

Durch die in den Unteransprüchen aufgeführten Maßnahmen sind vorteilhafte Weiterbildungen und Verbesserungen der im Hauptanspruch angegebenen Erfindung möglich.

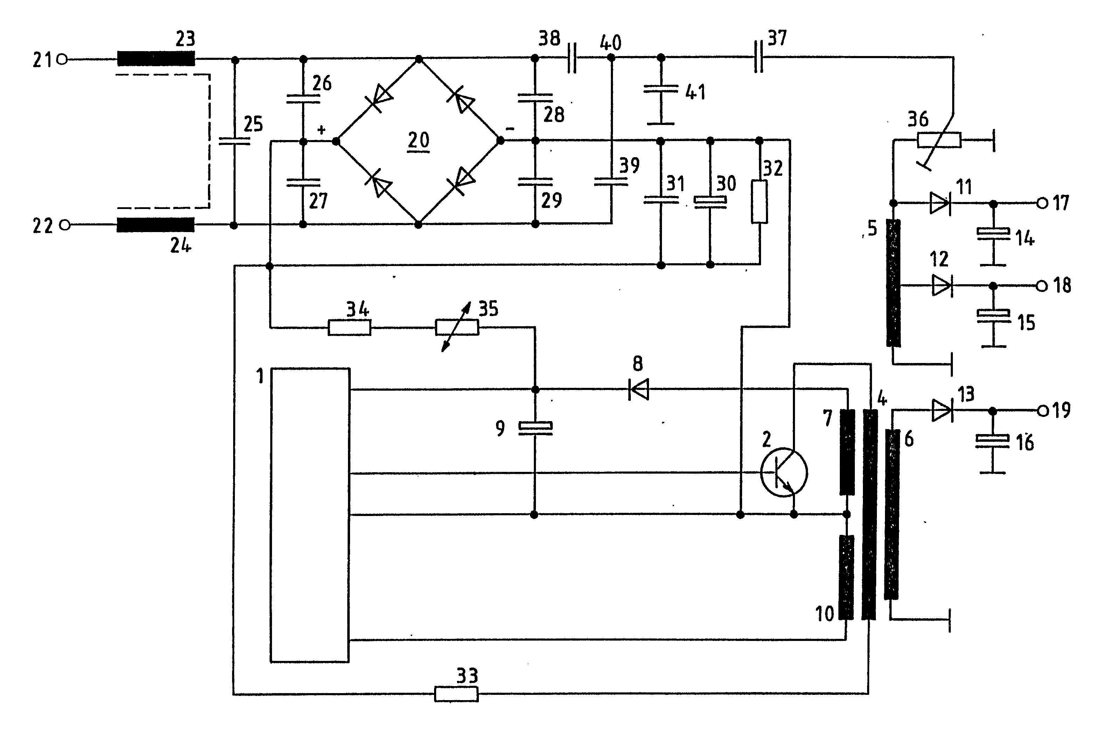

Ein Ausführungsbeispiel der Erfindung ist in der Zeichnung anhand mehrerer Figuren dargestellt und in der nachfolgenden Beschreibung naher erläutert.

In der Zeichnung ist der Spannungswandler, der im wesentlichen eine Steuerschaltung, einen Schalttransistor 2 und einen Transformator 3 umfaßt, der Übersichtlichkeit halber stark vereinfacht dargestellt. Eine Darstellung von Details erübrigt sich, da derartige Spannungswandler im einzelnen hinreichend bekannt sind. Als Steuerschaltung 1 eignet sich beispielsweise eine integrierte Schaltung vom Typ TDA 4600, welche die Erzeugung der Steuerspannung für den Schalttransistor 2 sowie Regelfunktionen ubernimmt.

Der Transformator 3 weist eine Primärwicklung 4 und zwei Sekundärwicklungen 5, 6 auf. Außerdem ist eine weitere Wicklung 7 vorgesehen, die zusammen mit einer Diode 8 und einem Ladekondensator 9 eine Betriebsspannung für die Steuerschaltung 1 erzeugt. Schließlich verfügt der Transformator 3 über eine weitere Wicklung 10, deren Spannung zu Steuerzwecken der Steuerschaltung 1 zugeführt wird. Die sekundärseitige Beschaltung des Transformators 3 ist lediglich durch Gleichrichterdioden 11, 12, 13 und Ladekondensatoren 14, 15, 16 angedeutet. An den Ausgängen 17, 18, 19 können dann die zum Betrieb des Gerätes erforderlichen Gleichspannungen entnommen werden.

Zur Spannungsversorgung des Spannungswandlers dient ein Brückengleichrichter 20, dem uber Netzanschlüsse 21, 22 und ein an sich bekanntes Netzfilter 23, 24, 25 Wechselspannung zugeführt wird. Aus Entstörungsgründen sind ebenfalls in an sich bekannter Weise den Zweigen des Brückengleichrichters 20 Kondensatoren 26 bis 29 parallelgeschaltet. An den Brückengleichrichter 20 ist ein Ladekondensator 30, ein weiterer Kondensator 31 und ein Widerstand 32 angeschlossen. Der Minusausgang des Brückengleichrichters 20 ist mit dem Emitter des Schalttransistors 2 verbunden, während der positive Ausgang über einen Schutzwiderstand 33 an die Primärwicklung 4 angeschlossen ist.

Über eine Reihenschaltung aus einem Widerstand 34 und einem temperaturabhängigen Widerstand 35 ist der Brückengleichrichter 20 ferner mit einem Eingang der Steuerschaltung 1 verbunden, welcher zur Zuführung der Betriebsspannung dient. Diese Maßnahme ermöglicht nach dem Einschalten des Gerätes einen vorläufigen Betrieb der Steuerschaltung 1, bevor die Betriebsspannung für die Steuerschaltung 1 mit Hilfe der Wicklung 7 erzeugt wird.

Zur Kompensation von Störungen wird mit Hilfe eines einstellbaren Spannungsteilers 36 ein Teil der von der Sekundärwicklung 5 erzeugten Spannung über einen Kondensator 37 in den Bereich der Spannungsschiene gekoppelt. Dazu ist der vom Schleifer des einstellbaren Spannungsteilers 36 abgewandte Anschluß des Kondensators 37 an den Verbindungspunkt 40 zweier Kondensatoren 38, 39 angeschlossen. Außerdem ist der Verbindungspunkt 40 uber einen weiteren Kondensator 41 mit Massepotential verbunden. Der Kondensator 37 hat bei einer praktisch ausgeführten Schaltung einen Wert von 100 pF und stellt daher für die Netzspannung einen ausreichend großen Widerstand dar. Die von dem Transformator 3 an sich bewirkte Potentialtrennung wird daher durch den Kondensator 37 nicht beeinträchtigt. Voraussetzung ist allerdings eine genügend hohe Spannungsfestigkeit des Kondensators. Entsprechend den Erfordernissen im Einzelfall kann im Rahmen der Erfindung auch eine zusätzliche Hilfswicklung im Transformator 3 vorgesehen sein, von welcher in geeigneter Weise eine Kopplung auf die von dem Netzfilter 23 bis 25 und den anschließenden Leitungen gebildete

Spannungsschiene erfolgt.

**Ansprüche**

1. Schaltungsanordnung zur Kompensation von durch einen Spannungswandler verursachten Störungen, wobei der Spannungswandler einen Transformator umfaßt und über eine Spannungsschiene mit Betriebsspannung versorgt wird, dadurch gekennzeichnet, daß eine Kopplung zwischen einem Anschluß des Transformators (3) und der Spannungsschiene vorgesehen ist.

2. Schaltungsanordnung nach Anspruch 1, dadurch gekennzeichnet, daß die Kopplung mit einem Kondensator (37) erfolgt.

3. Schaltungsanordnung nach Anspruch 2, dadurch gekennzeichnet, daß zwischen dem Anschluß des Transformators (3) und dem Kondensator (37) ein abgleichbarer Spannungsteiler (36) angeordnet ist.

4. Schaltungsanordnung nach einem der vorhergehenden Anspruche, dadurch gekennzeichnet, daß der Anschluß Teil einer Sekundärwicklung (5) des Transformators (3) ist.

5. Schaltungsanordnung nach einem der Ansprüche 1 bis 3, dadurch gekennzeichnet, daß der Anschluß Teil einer Hilfswicklung des Transformators ist.

6. Schaltungsanordnung nach einem der vorhergehenden Ansprüche, dadurch gekennzeichnet, daß die Spannungsschiene in an sich bekannter Weise zwei Netzspannung führende Leitungen umfaßt, in welche je eine Entstördrossel (23, 24) eingefügt ist und wobei zwischen die Leitungen ein Brückengleichrichter (20) und parallel zu den Zweigen des Brückengleichrichters Entstörkondensatoren (26 bis 29) geschaltet sind, daß zwischen die Leitungen eine Reihenschaltung aus zwei weiteren Kondensatoren (38, 39) geschaltet ist, deren Verbindungspunkt (40) an den Kondensator (37) angeschlossen ist.

7. Schaltungsanordnung nach Anspruch 6, dadurch gekennzeichnet, daß zwischen dem Verbindungspunkt (40) und Massepotential ein dritter Kondensator (41) angeordnet ist.

EP 0 338 254 A2